# EUROPEAN PATENT APPLICATION

(11) **EP 4 807 800 A1**
(43) Date of publication of application: **16.09.2026**
(21) Application number: 26161440.8
(22) Date of filing: 27.02.2026
(51) Int. Cl.: H01M 4/134, H01M 4/36, H01M 10/0562, H01M 4/38

(54) **ELECTRODE ACTIVE MATERIAL COMPOSITE PARTICLES, ELECTRODE MIXTURE, AND BATTERY**

(30) Priority: 13.03.2025 JP 2025040721
(71) Applicant: Toyota Jidosha Kabushiki Kaisha, Toyota-shi, Aichi-ken 471-8571 (JP)
(72) Inventor: KUDO, So, TOYOTA-SHI, AICHI-KEN, 471-8571 (JP); NOMOTO, Kazushige, TOYOTA-SHI, AICHI-KEN, 471-8571 (JP); YOKOI, Yuma, TOYOTA-SHI, AICHI-KEN, 471-8571 (JP)
(74) Representative: Cabinet Beau de Loménie

(57) **Abstract**

The present disclosure provides electrode active material composite particles capable of alleviating the influence of expansion and contraction of silicon during charging and discharging of a battery, an electrode mixture including such electrode active material composite particles, and a battery including such an electrode mixture. The electrode active material composite particles of the present disclosure each include a plurality of porous silicon particles as primary particles. In the electrode active material composite particles of the present disclosure, the ratio of the d50 of the primary particles to the d50 of the composite particles is from 0.04 to 0.22. The electrode mixture of the present disclosure includes the electrode active material composite particles of the present disclosure. The battery of the present disclosure has an electrode active material layer, and the electrode active material layer contains the electrode mixture of the present disclosure.

## Description

### TECHNICAL FIELD

The present disclosure relates to electrode active material composite particles, an electrode mixture, and a battery.

### BACKGROUND

In a battery that includes silicon as an electrode active material, it is known that the silicon expands and contracts during charging and discharging. A technique for alleviating the influence of such expansion and contraction by voids in an electrode active material layer has been developed.

For example, PTL 1 discloses a negative electrode layer used in an all-solid-state battery, the negative electrode layer having a negative electrode active material and a sulfide solid electrolyte, in which the negative electrode active material is composite particles each including a binder and a plurality of particles including a Si element or a Sn element, and having a porosity of 15% or less.

### [CITATION LIST]

### [PATENT LITERATURE]

[PTL 1] Japanese Unexamined Patent Publication (Kokai) No. 2019-121557

### SUMMARY

### [TECHNICAL PROBLEM]

The electrode active material composite particles can alleviate the influence of expansion and contraction of silicon during charging and discharging of a battery by voids in the composite particles. However, there is room for improvement in alleviating the influence of such expansion and contraction in the electrode active material composite particles containing silicon.

An object of the present disclosure is to provide electrode active material composite particles capable of alleviating the influence of expansion and contraction of silicon during charging and discharging of a battery, an electrode mixture including such electrode active material composite particles, and a battery including such an electrode mixture.

The present inventors have found that this object can be achieved by the following means.

### <Aspect 1>

Electrode active material composite particles each including a plurality of porous silicon particles as primary particles, wherein
a ratio of a d50 of the primary particles to a d50 of the composite particles is from 0.04 to 0.22.

### <Aspect 2>

The electrode active material composite particles according to aspect 1, wherein the ratio of the d50 of the primary particles to the d50 of the composite particles is from 0.06 to 0.21.

### <Aspect 3>

The electrode active material composite particles according to aspect 2, wherein the ratio of the d50 of the primary particles to the d50 of the composite particles is from 0.10 to 0.20.

### <Aspect 4>

The electrode active material composite particles according to any one of aspects 1 to 3, wherein the d50 of the primary particles is from 0.3 µm to 2.1 µm.

### <Aspect 5>

The electrode active material composite particles according to aspect 4, wherein the d50 of the primary particles is from 0.5 µm to 2.0 µm.

### <Aspect 6>

The electrode active material composite particles according to aspect 5, wherein the d50 of the primary particles is from 0.8 µm to 1.7 µm.

### <Aspect 7>

The electrode active material composite particles according to any one of aspects 1 to 6, wherein the d50 of the composite particles is from 7.0 µm to 9.5 µm.

### <Aspect 8>

The electrode active material composite particles according to any one of aspects 1 to 7, wherein the electrode active material composite particles each further including a binder.

### <Aspect 9>

An electrode mixture including the electrode active material composite particles according to any one of aspects 1 to 8.

### <Aspect 10>

A battery, having an electrode active material layer, wherein
the electrode active material layer contains the electrode mixture according to aspect 9.

### <Aspect 11>

The battery according to aspect 10, wherein the battery is a solid-state battery.

### [ADVANTAGEOUS EFFECTS OF INVENTION]

According to the present disclosure, it is possible to provide electrode active material composite particles capable of alleviating the influence of expansion and contraction of silicon during charging and discharging of a battery, an electrode mixture including such electrode active material composite particles, and a battery including such an electrode mixture.

### BRIEF DESCRIPTION OF DRAWINGS

Fig. 1 is a schematic cross-sectional view illustrating an example of a battery of the present disclosure.
Fig. 2 is a graph showing a relationship between a ratio of a d50 of primary particles to a d50 of composite particles and a restraint pressure increase amount in batteries of Examples 1 to 5 and Comparative Examples 1 to 3.

### DESCRIPTION OF EMBODIMENTS

Hereinafter, embodiments of the present disclosure will be described in detail. However, it should be noted that the present disclosure is not limited to the following embodiments, and can be variously modified within the scope thereof.

### <<Electrode Active Material Composite Particles>>

The electrode active material composite particles of the present disclosure each include a plurality of porous silicon particles as primary particles. In the electrode active material composite particles of the present disclosure, the ratio of the d50 of the primary particles to the d50 of the composite particles is from 0.04 to 0.22.

The present inventors have found an appropriate range of the ratio of the d50 of the primary particles to the d50 of the composite particles in the electrode active material composite particles each including a plurality of porous silicon particles as the primary particles, and has thus completed the present invention. Specifically, the present inventors have found that in the battery including the electrode active material composite particles of the present disclosure, the influence of expansion and contraction of silicon during charging and discharging can be alleviated.

The reason for this is not intended to be bound by any theory, but is presumed to be as follows. When the ratio of the d50 of the primary particles to the d50 of the composite particles is a predetermined value or more, i.e., when the primary particles have a predetermined size or more with respect to the composite particles, it is considered that the complexity of the conduction path of a carrier ion moving between electrode active material particles, serving as the primary particles, is alleviated, and the carrier ion easily moves between the electrode active material particles. Accordingly, it is considered that reaction unevenness in the electrode active material composite particles is less likely to occur, and as a result, local expansion of silicon is suppressed, which helps alleviate the influence of expansion and contraction.

The electrode active material composite particles each have a plurality of voids, and the voids have an effect of alleviating expansion and contraction of silicon. It is considered that when the ratio of the d50 of the primary particles to the d50 of the composite particles is a predetermined value or less, i.e., when the primary particles have a predetermined size or less with respect to the composite particles, voids are appropriately formed in the composite particles, and thus the above effect is easily exhibited.

In the porous silicon particles having a plurality of pores, a part of the expansion of silicon is absorbed by the pores, whereas in the solid silicon having no such pores, the expansion of silicon directly leads to the expansion of the silicon particles, and therefore, the porous silicon and the solid silicon are different in the aspects of expansion by charging and discharging. Therefore, the predetermined range of the ratio of the d50 of the primary particles to the d50 of the composite particles in the present disclosure is specific to electrode active material composite particles each including a plurality of porous silicon particles as primary particles.

The electrode active material composite particles each are a secondary particle formed by aggregation of a plurality of porous silicon primary particles as an electrode active material. The electrode active material composite particles may each be a secondary particle formed by granulating a plurality of porous silicon primary particles. In the present disclosure, the term "electrode active material composite particle" may be simply referred to as a "composite particle".

The "electrode active material" may be a "positive electrode active material" or a "negative electrode active material", particularly a "negative electrode active material".

Hereinafter, each element constituting the electrode active material composite particles of the present disclosure will be described.

### <Primary Particles>

The electrode active material composite particles of the present disclosure includes a plurality of porous silicon particles as primary particles. Silicon functions as an electrode active material and undergoes expansion and contraction in response to charging and discharging of the battery.

The porous silicon particles mean silicon particles each having a plurality of pores. As a result, the influence of expansion and contraction of silicon can be alleviated not only by voids in the electrode active material composite particles described later but also by the pores of the silicon particles. The number of pores, pore volume, pore diameter, and the like of the porous silicon particles are not particularly limited, and can be appropriately set in consideration of the magnitude of expansion and contraction of silicon and the like. The pore diameter may be, for example, on the order of nanometers.

The number of primary particles contained in one electrode active material composite particle is not particularly limited, and may be, for example, 2 or more, 5 or more, 10 or more, 50 or more, or 100 or more, and may be 10000 or less, 1000 or less, 500 or less, or 100 or less.

The content of the primary particles in the electrode active material composite particle is not particularly limited, and can be appropriately set in consideration of a desired battery capacity and the like.

### <d50 Particle Diameter and Particle Diameter Ratio>

### (d50 of Primary Particles/d50 of Composite Particles)

The ratio of the d50 of the primary particles to the d50 of the composite particles is from 0.04 to 0.22. This can alleviate the influence of expansion and contraction of silicon during charging and discharging of the battery.

The ratio of the d50 of the primary particles to the d50 of the composite particles may be from 0.06 to 0.21 or from 0.10 to 0.20. The ratio of the d50 of the primary particles to the d50 of the composite particles may be 0.05 or more, 0.06 or more, 0.07 or more, 0.08 or more, 0.09 or more, 0.10 or more, 0.11 or more, 0.12 or more, 0.13 or more, 0.14 or more, 0.15 or more, 0.16 or more, 0.17 or more, 0.18 or more, 0.19 or more, or 0.20 or more, and may be 0.21 or less, 0.20 or less, 0.19 or less, 0.18 or less, 0.17 or less, 0.16 or less, 0.15 or less, 0.14 or less, 0.13 or less, 0.12 or less, or 0.11 or less. This can effectively alleviate the influence of expansion and contraction of silicon during charging and discharging of the battery.

### (d50 of Composite Particles)

The d50 of the composite particles may be from 7.0 µm to 9.5 µm or from 7.1 µm to 9.1 µm. The d50 of the composite particles may be 7.0 µm or more, 7.1 µm or more, 7.3 µm or more, 7.5 µm or more, 8.0 µm or more, 8.5 µm or more, 8.7 µm or more, 8.9 µm or more, or 9.1 µm or more, and may be 9.5 µm or less, 9.4 µm or less, 9.1 µm or less, 8.7 µm or less, 8.5 µm or less, 8.0 µm or less, 7.5 µm or less, 7.3 µm or less, or 7.1 µm or less. This can effectively alleviate the influence of expansion and contraction of silicon during charging and discharging of the battery.

### (d50 of Primary Particles)

The d50 of the primary particles may be from 0.3 µm to 2.1 µm, from 0.5 µm to 2.0 µm, or from 0.8 µm to 1.7 µm. The d50 of the primary particles may be 0.3 µm or more, 0.5 µm or more, 0.7 µm or more, 0.8 µm or more, 0.9 µm or more, 1.0 µm or more, 1.1 µm or more, 1.2 µm or more, 1.3 µm or more, 1.4 µm or more, 1.5 µm or more, 1.6 µm or more, or 1.7 µm or more, and may be 2.1 µm or less, 2.0 µm or less, 1.8 µm or less, 1.7 µm or less, 1.6 µm or less, 1.5 µm or less, 1.4 µm or less, 1.3 µm or less, 1.2 µm or less, 1.1 µm or less, 1.0 µm or less, 0.9 µm or less, or 0.8 µm or less. This can effectively alleviate the influence of expansion and contraction of silicon during charging and discharging of the battery.

The d50 of the primary particles and the d50 of the composite particles can be measured using a laser diffraction-scattering particle size analyzer. As the dispersion medium, pure water can be used. The refractive index at the time of measurement may be, for example, 3.5.

As the laser diffraction-scattering particle size analyzer, for example, Partica LA-960V2 available from HORIBA can be used.

The d50 of the primary particles may be measured from the composite particles obtained by disassembling the battery through the following procedure. Specifically, the obtained composite particles are washed with an organic solvent capable of dissolving the binder and the like. Thereafter, for the composite particles obtained by performing centrifugation and removing the supernatant, the d50 of the primary particles can be measured by the above-described laser diffraction-scattering particle size analyzer.

The d50 of the composite particles may be measured from an electrode laminate obtained by disassembling the battery through the following procedure. Specifically, at least a part of the negative electrode active material layer is taken out as a sample from the obtained electrode laminate and washed using an organic solvent capable of dissolving the solid electrolyte. Thereafter, the d50 of the composite particles can be measured by the above laser diffraction-scattering particle size analyzer.

### <Binder>

The electrode active material composite particles of the present disclosure may each further include a binder. The binder can bind a plurality of primary particles to each other.

The binder is not particularly limited, and may be, for example, a butadiene rubber (BR)-based binder, a butylene rubber (IIR)-based binder, an acrylate butadiene rubber (ABR)-based binder, a styrene butadiene rubber (SBR)-based binder, a polyvinylidene fluoride (PVdF)-based binder, a polytetrafluoroethylene (PTFE)-based binder, a polyimide (PI)-based binder, a carboxymethyl cellulose (CMC)-based binder, a polyacrylic acid salt-based binder, a polyacrylic acid ester-based binder, and the like, or a combination thereof.

The content of the binder in the electrode active material composite particle is not particularly limited, and can be appropriately set in consideration of desired binding properties and the like.

### <Void>

The electrode active material composite particles of the present disclosure each have a plurality of voids. The voids can alleviate the influence of expansion and contraction of silicon during charging and discharging of the battery.

The number of voids, porosity, size of the voids, and the like in the electrode active material composite particle are not particularly limited, and can be appropriately set in consideration of, for example, the magnitude of expansion and contraction of silicon.

### <<Method for Producing Electrode Active Material Composite Particles>>

The electrode active material composite particles of the present disclosure can be produced by a method including: providing a slurry including a plurality of porous silicon particles as primary particles, and a dispersion medium; and drying and removing the dispersion medium by spray drying.

Reference may be made to the above description regarding the primary particles.

The dispersion medium is not particularly limited, as long as the primary particles can be dispersed therein.

The slurry may further contain a binder. Reference may be made to the above description regarding the binder.

When the slurry includes a binder, the dispersion medium is not particularly limited as long as it can disperse the primary particles and dissolve or disperse the binder.

The d50 of the electrode active material composite particles can be controlled by adjusting the solid concentration of the slurry, the liquid feed rate of the slurry in spray drying, drying temperature, and the like according to the d50 of the primary particles. Accordingly, for example, for the primary particles having a d50 within a predetermined range, the d50 of the electrode active material composite particles can be controlled to be substantially the same.

### <<Electrode Mixture>>

The electrode mixture of the present disclosure includes the electrode active material composite particles of the present disclosure. The electrode mixture may optionally include a solid electrolyte, a conductive additive, a binder, and the like.

In the present disclosure, the "electrode mixture" refers to a composition that can constitute an electrode active material layer as it is or by further containing other components. In the present disclosure, the "electrode mixture slurry" refers to a slurry that includes a dispersion medium in addition to the "electrode mixture" and can be applied and dried to form an electrode active material layer.

In the present disclosure, the "electrode mixture" may be a "positive electrode mixture" or a "negative electrode mixture", particularly a "negative electrode mixture".

Hereinafter, each element constituting the electrode mixture of the present disclosure will be described.

### <Electrode Active Material Composite Particles>

Reference may be made to the above description regarding the electrode active material composite particles.

The content of the electrode active material composite particles in the electrode mixture is not particularly limited, and can be appropriately set in consideration of a desired battery capacity and the like.

### <Solid Electrolyte>

Examples of the solid electrolyte include inorganic solid electrolytes such as a sulfide solid electrolyte, an oxide solid electrolyte, a nitride solid electrolyte, and a halide solid electrolyte, and organic polymer electrolytes such as a polymer electrolyte. The solid electrolyte may be, in particular, a sulfide solid electrolyte.

For example, when the battery is a lithium ion secondary battery, the solid electrolyte may have lithium ionic conductivity.

Examples of the sulfide solid electrolyte having lithium ionic conductivity include a solid electrolyte containing a Li element, an X element (X represents at least one of P, As, Sb, Si, Ge, Sn, B, Al, Ga, and In), and a S element. The sulfide solid electrolyte may further contain at least one of an O element and a halogen element. Examples of the halogen element include an F element, a Cl element, a Br element, and an I element.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂₋LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numbers; and Z represents any of Ge, Zn, and Ga), Li₂S-GeS₂, Li₂S-SiS₂-Li₃PO₄, and Li₂S-SiS₂-LiₓMO_{y} (where x and y are positive numbers; and M represents any one of P, Si, Ge, B, Al, Ga, and In).

Examples of the oxide solid electrolyte having lithium ionic conductivity include a solid electrolyte containing a Li element, a Y element (Y represents at least one of Nb, B, Al, Si, P, Ti, Zr, Mo, W, and S), and an O element. Specific examples thereof include garnet-type solid electrolytes such as Li₇La₃Zr₂O₁₂, Li₇₋ₓLa₃(Zr₂₋ₓNbₓ)O₁₂ (0≤x≤2), and Li₅La₃Nb₂O₁₂; perovskite-type solid electrolytes such as (Li,La)TiO₃, (Li,La)NbO₃, and (Li,Sr)(Ta,Zr)O₃; nasicon-type solid electrolytes such as Li(Al,Ti)(PO₄)₃ and Li(Al,Ga)(PO₄)₃; Li-P-O-based solid electrolytes such as Li₃PO₄ and LIPON (compound in which part of O in Li₃PO₄ is substituted with N); and Li-B-O-based solid electrolytes such as Li₃BO₃ and a compound in which a part of O of Li₃BO₃ is substituted with C.

The content of the solid electrolyte in the electrode mixture is not particularly limited, and can be appropriately set in consideration of the desired ionic conductivity and the like.

### <Conductive Additive>

The conductive additive may be, for example, a carbon material, metal particles, or a combination thereof. The carbon material may be, for example, a non-fibrous carbon material such as acetylene black (AB) or Ketjenblack (KB); a fibrous carbon material such as vapor-grown carbon fiber (VGCF), carbon nanotube (CNT), or carbon nanofiber (CNF); or a combination thereof. The metal particles may be, for example, nickel, copper, iron, stainless steel, or a combination thereof.

The content of the conductive additive in the electrode mixture is not particularly limited, and can be appropriately set in consideration of the desired conductivity and the like.

### <Binder>

The binder may be, for example, a rubber-based binder such as butadiene rubber, hydrogenated butadiene rubber, styrene butadiene rubber (SBR), hydrogenated styrene butadiene rubber, nitrile butadiene rubber, hydrogenated nitrile butadiene rubber, acrylate butadiene rubber (ABR), or ethylene propylene rubber; a fluoride-based binder such as polyvinylidene fluoride (PVdF), a polyvinylidene fluoride-polyhexafluoropropylene copolymer (PVdF-HFP), polytetrafluoroethylene, or fluororubber, a polyolefin-based thermoplastic resin such as polyethylene, polypropylene, or polystyrene, an imide-based resin such as polyimide or polyamide-imide; an amide-based resin such as polyamide; an acrylic-based resin such as polymethyl acrylate or polyethyl acrylate; a methacrylic-based resin such as polymethyl methacrylate or polyethyl methacrylate; or a combination thereof.

The content of the binder in the electrode mixture is not particularly limited and can be appropriately set in consideration of the desired binding properties and the like.

### <Additional Component>

The electrode mixture may or may not further contain a component other than the above.

### <<Battery>>

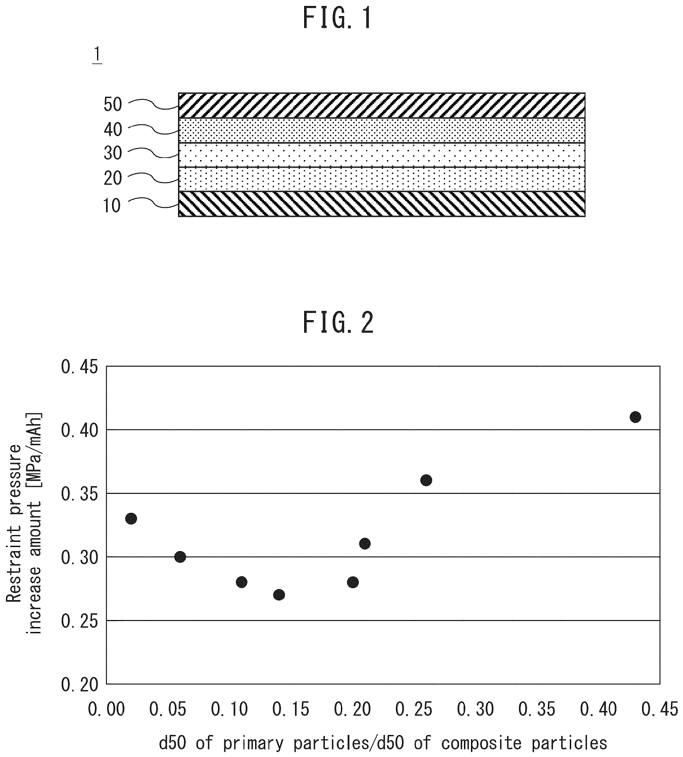

The battery of the present disclosure has an electrode active material layer, and the electrode active material layer contains the electrode mixture of the present disclosure. As illustrated in Fig. 1, a battery 1 of the present disclosure may include a negative electrode current collector layer 10, a negative electrode active material layer 20, an electrolyte layer 30, a positive electrode active material layer 40, and a positive electrode current collector layer 50 in this order. In the battery of the present disclosure, the negative electrode active material layer 20 may contain the electrode mixture of the present disclosure.

The battery of the present disclosure may be a liquid-based battery or a solid-state battery, particularly a solid-state battery. The solid-state battery may include a combination of a solid electrolyte and a liquid electrolyte as an electrolyte. The solid-state battery may be an all-solid-state battery, i.e., a battery including only a solid electrolyte as the electrolyte.

The battery of the present disclosure may be a secondary battery, particularly a lithium ion secondary battery.

The battery of the present disclosure may be restrained by a restraint member, such as an end plate, from both sides in the stacking direction of the layers. Examples of the restraint method include, but are not limited to, a method using the restraint torque of the bolt.

Hereinafter, each element constituting the battery of the present disclosure will be described. In particular, a case wherein the battery of the present disclosure is an all-solid-state battery and the electrode active material layer containing the electrode mixture of the present disclosure is a negative electrode active material layer will be described below as an example.

### <Negative Electrode Current Collector Layer>

The negative electrode current collector layer may have a foil shape, a plate shape, a mesh shape, a perforated metal shape, a foam, or the like. The negative electrode current collector layer may be a metal foil, a metal mesh, or a carbon sheet, particularly a metal foil. The negative electrode current collector layer may be made of a plurality of foils, sheets, or the like.

The metal constituting the negative electrode current collector layer is not particularly limited, and may be, for example, copper, nickel, chromium, gold, platinum, silver, aluminum, iron, titanium, zinc, cobalt, stainless steel, or the like. In particular, the negative electrode current collector layer may contain at least one metal selected from copper, nickel, and stainless steel.

For the purpose of adjusting the resistance, a coating layer of some kind may be formed on the surface of the negative electrode current collector layer. The negative electrode current collector layer may be a metal foil or a substrate on which the above metal is plated or vapor-deposited. In addition, when the negative electrode current collector layer is composed of a plurality of metal foils, some layer may be provided between the plurality of metal foils.

The thickness of the negative electrode current collector layer is not particularly limited, and may be, for example, 0.1 µm or more, or 1 µm or more, and may be 1 mm or less, or 100 µm or less.

### <Negative Electrode Active Material Layer>

The negative electrode active material layer includes the electrode mixture of the present disclosure. Reference may be made to the above description regarding the electrode mixture of the present disclosure. The negative electrode active material layer may be formed by shaping the electrode mixture of the present disclosure itself into a layer.

The thickness of the negative electrode active material layer is not particularly limited, and may be, for example, 0.1 µm or more and 1000 µm or less.

### <Solid Electrolyte Layer>

The solid electrolyte layer includes at least solid electrolyte particles and may optionally further include a binder and the like.

Reference may be made to the above description regarding the solid electrolyte particles and binder.

The thickness of the solid electrolyte layer is not particularly limited, and may be, for example, 0.1 µm or more and 1000 µm or less.

### <Positive Electrode Active Material Layer>

The positive electrode active material layer includes at least a positive electrode active material, and may optionally further include a solid electrolyte, a conductive additive, a binder, and the like.

The positive electrode active material is not particularly limited, and may be, for example, an oxide active material. The oxide active material used in the lithium ion battery may be, for example, LiCoO₂, LiMnO₂, Li₂NiMn₃O₈, LiVO₂, LiCrO₂, LiFePO₄, LiCoPO₄, LiNiO₂, LiNi_{1/3}Co_{1/3}Mn_{1/3}O₂, or the like. A coating layer containing a Li-ion conductive oxide such as LiNbO₃ may be formed on the surface of the active material.

The content of the positive electrode active material in the positive electrode active material layer is not particularly limited.

Reference may be made to the above description regarding the solid electrolyte, conductive additive, and binder.

The thickness of the positive electrode active material layer is not particularly limited, and may be, for example, 0.1 µm or more and 1000 µm or less.

### <Positive Electrode Current Collector Layer>

The positive electrode current collector layer may have a foil shape, a plate shape, a mesh shape, a perforated metal shape, a foam, or the like. The positive electrode current collector layer may be a metal foil or a metal mesh, particularly a metal foil. The positive electrode current collector layer may be made of a plurality of foils.

The metal constituting the positive electrode current collector layer may be copper, nickel, chromium, gold, platinum, silver, aluminum, iron, titanium, zinc, cobalt, stainless steel, or the like, and in particular, the positive electrode current collector layer may contain aluminum.

For the purpose of adjusting the resistance, a coating layer of some kind may be formed on the surface of the positive electrode current collector layer. The positive electrode current collector layer may be a metal foil or a substrate on which the metal is plated or vapor-deposited. In addition, when the positive electrode current collector layer is composed of a plurality of metal foils, some layer may be provided between the plurality of metal foils.

The thickness of the positive electrode current collector layer is not particularly limited, and may be, for example, 0.1 µm or more, or 1 µm or more, and may be 1 mm or less, or 100 µm or less.

### <Additional Configuration>

The battery may be one in which each of the above-described configurations is housed inside the outer package. As the outer package, any known outer package of a battery can be adopted. A plurality of batteries may be electrically connected to each other as desired, or may be stacked on each other as desired to form a battery pack. In this case, the battery pack may be housed in a known battery case. The battery may further have an obvious configuration such as a necessary terminal. The shape of the battery may be, for example, a coin shape, a laminate (pouch) shape, a cylindrical shape, a square shape, or the like.

The method for producing the battery of the present disclosure is not particularly limited, and includes, for example, forming a negative electrode active material layer containing the electrode mixture of the present disclosure.

Examples of the method of forming the negative electrode active material layer containing the electrode mixture include a method of mixing constituent materials such as porous silicon primary particles to obtain an electrode mixture, the obtained electrode mixture being subjected to dry molding or wet molding.

The method for producing a battery of the present disclosure may further include forming an electrode laminate by laminating a negative electrode current collector layer, a negative electrode active material layer, a solid electrolyte layer, a positive electrode active material layer, and a positive electrode current collector layer in this order.

Other members such as a terminal are attached to the electrode laminate, if necessary. The electrode laminate is housed in a battery case and sealed to obtain a battery.

### EXAMPLES

### <<Example 1>>

### <Preparation of Electrode Active Material Composite Particles>

A plurality of porous silicon (Si) particles (d50: 0.5 µm) as primary particles prepared by a known method were added to a solution in which a binder was dissolved or dispersed in an organic solvent as a dispersion medium to obtain a slurry. The organic solvent in the slurry was dried and removed by spray drying to produce an electrode active material composite particles.

The d50 of the primary particles and the d50 of the composite particles were measured with a laser diffraction-scattering particle size analyzer (Partica LA-960V2, available from by HORIBA, Ltd.). Pure water was used as a dispersion medium, and the refractive index was 3.5. The d50 of the primary particles, the d50 of the composite particles, and the ratio of the d50 of primary particles to the d50 of the composite particles are shown in Table 1. In each of the examples described later, measurement was performed in the same manner.

### <Production of Negative Electrode Active Material Layer>

The obtained electrode active material composite particles, binder, conductive additive, and solid electrolyte were added to an organic solvent to prepare a mixed solution. The mixed solution was kneaded using an ultrasonic homogenizer to obtain a negative electrode mixture slurry. The obtained negative electrode mixture slurry was applied to a nickel foil as a negative electrode current collector layer to produce a negative electrode active material layer. Thus, a negative electrode laminate in which the negative electrode current collector layer and the negative electrode active material layer were laminated was obtained and formed into a strip shape.

### <Production of Solid Electrolyte Layer>

A binder and a solid electrolyte were added to an organic solvent to prepare a mixed solution. The mixed solution was kneaded using an ultrasonic homogenizer to obtain a solid electrolyte mixture slurry. The obtained solid electrolyte mixture slurry was applied to an aluminum (Al) foil as a release sheet to produce a solid electrolyte layer. A total of three solid electrolyte layers were produced in the same procedure and formed into a strip shape.

### <Production of Positive Electrode Active Material Layer>

A binder, conductive additive, solid electrolyte, and LiNi_{0.8}Co_{0.15}Mn_{0.05}O₂ as a positive electrode active material were added to an organic solvent to prepare a mixed solution. The mixed solution was kneaded using an ultrasonic homogenizer to obtain a positive electrode mixture slurry. The obtained positive electrode mixture slurry was applied to an Al foil as a positive electrode current collector layer to produce a positive electrode active material layer. Thus, a positive electrode laminate in which the positive electrode current collector layer and the positive electrode active material layer were laminated was obtained, and the positive electrode laminate was formed into a strip shape.

### <Production of Battery>

The negative electrode laminate and the second solid electrolyte layer were laminated so that the negative electrode active material layer and the solid electrolyte layer faced each other, and roll-pressed at 25°C and a pressure of 50 kN/cm. The solid electrolyte layer was transferred onto the negative electrode active material layer by peeling off the Al foil as a release sheet from the solid electrolyte layer.

The positive electrode laminate and the first solid electrolyte layer were laminated so that the positive electrode active material layer and the solid electrolyte layer faced each other and roll-pressed at 165°C and a pressure of 50 kN/cm. The solid electrolyte layer was transferred onto the positive electrode active material layer by peeling off the Al foil as a release sheet from the solid electrolyte layer.

The negative electrode laminate to which the solid electrolyte layer was transferred and the positive electrode laminate to which the solid electrolyte layer was transferred were punched with a punching machine having a size of φ 13.00 mm and φ 11.28 mm, respectively.

The third solid electrolyte layer punched out to a predetermined size was further transferred onto the second solid electrolyte layer laminated on the negative electrode active material layer using a uniaxial press machine. The negative electrode laminate and the positive electrode laminate were laminated so that the solid electrolyte layer on the negative electrode active material layer and the solid electrolyte layer on the positive electrode active material layer faced each other.

A current extraction tab was attached to the positive electrode active material layer and the negative electrode active material layer, and the resultant was sealed in an Al laminate using a vacuum laminate sealer and restrained at a pressure of 5 MPa to produce an all-solid-state battery.

### <Measurement of Restraint Pressure Increase Amount>

The restraint pressure increase amount when the obtained all-solid-state battery was charged from the uncharged state to 4.05 V was measured using a load cell. The results are shown in Table 1 and Fig. 2. The values shown in Table 1 and Fig. 2 are obtained by normalizing the measured values at a Si charge of 1000 mAh with the capacity of the all-solid-state battery. The restraint pressure increase amount means the expansion amount of the electrode active material composite particles.

### <<Examples 2 to 5 and Comparative Examples 1 to 3>>

All-solid-state batteries of Example 2 to 5 and Comparative Example 1 to 3 were obtained and evaluated in the same manner as in Example 1 except that the d50 of the porous silicon particles, serving as primary particles, was changed as listed in Table 1, and the solid concentration of the slurry and the liquid feed rate in the preparation of the electrode active material composite particles were changed according to the d50 of the porous silicon particles. The results are shown in Table 1 and Fig. 2.

### [Table 1]

**Table 1**

| | d50 of primary particles [µm] | d50 of composite particles [µm] | d50 of primary particles /d50 of composite particles | Restraint pressure increase amount [MPa/mAh] |
|---|---|---|---|---|
| Comparative Example 1 | 0.2 | 9.7 | 0.02 | 0.33 |
| Example 1 | 0.5 | 7.3 | 0.06 | 0.30 |
| Example 2 | 0.8 | 7.1 | 0.11 | 0.28 |
| Example 3 | 1.3 | 9.1 | 0.14 | 0.27 |
| Example 4 | 1.7 | 8.7 | 0.20 | 0.28 |
| Example 5 | 2.0 | 9.4 | 0.21 | 0.31 |
| Comparative Example 2 | 2.5 | 9.7 | 0.26 | 0.36 |
| Comparative Example 3 | 3.5 | 8.2 | 0.43 | 0.41 |

As shown in Table 1 and Fig. 2, in the batteries of Examples, in which the ratio of the d50 of the primary particles to the d50 of the composite particles was from 0.04 to 0.22, the restraint pressure increase amount was small. In particular, In the batteries of Examples 2 to 4, in which the ratio of the d50 of the primary particles to the d50 of the composite particles was from 0.10 to 0.20, the restraint pressure increase amount was further small.

### REFERENCE SIGNS LIST

- 1: Battery
- 10: Negative electrode current collector layer
- 20: Negative electrode active material layer
- 30: Electrolyte layer
- 40: Positive electrode active material layer
- 50: Positive electrode current collector layer

## Claims

1. Electrode active material composite particles each including a plurality of porous silicon particles as primary particles, wherein
a ratio of a d50 of the primary particles to a d50 of the composite particles is from 0.04 to 0.22.

2. The electrode active material composite particles according to claim 1, wherein the ratio of the d50 of the primary particles to the d50 of the composite particles is from 0.06 to 0.21.

3. The electrode active material composite particles according to claim 2, wherein the ratio of the d50 of the primary particles to the d50 of the composite particles is from 0.10 to 0.20.

4. The electrode active material composite particles according to any one of claims 1 to 3, wherein the d50 of the primary particles is from 0.3 µm to 2.1 µm.

5. The electrode active material composite particles according to claim 4, wherein the d50 of the primary particles is from 0.5 µm to 2.0 µm.

6. The electrode active material composite particles according to claim 5, wherein the d50 of the primary particles is from 0.8 µm to 1.7 µm.

7. The electrode active material composite particles according to any one of claims 1 to 6, wherein the d50 of the composite particles is from 7.0 µm to 9.5 µm.

8. The electrode active material composite particles according to any one of claims 1 to 7, wherein the electrode active material composite particles each further including a binder.

9. An electrode mixture including the electrode active material composite particles according to any one of claims 1 to 8.

10. A battery (1), having an electrode active material layer (20), wherein
the electrode active material layer (20) contains the electrode mixture according to claim 9.

11. The battery (1) according to claim 10, wherein the battery (1) is a solid-state battery.
